# EUROPEAN PATENT SPECIFICATION

(11) **EP 2 098 569 B1**
(45) Date of publication and mention of the grant of the patent: **26.11.2014**
(21) Application number: 07850587.2
(22) Date of filing: 07.12.2007
(51) Int. Cl.: C08L 59/04, C08K 3/20, C08K 5/098, C08K 5/101, C08K 5/13, C08K 5/20, C08K 5/24, C08K 5/29, C08K 5/36, C08K 5/541, C08L 71/00

(54) **POLYACETAL RESIN COMPOSITION AND MOLDED ARTICLE THEREOF**
POLYACETALHARZZUSAMMENSETZUNG UND FORMKÖRPER DARAUS
COMPOSITION DE RÉSINE DE POLYACÉTAL ET ARTICLE MOULÉ OBTENU À PARTIR DE CETTE COMPOSITION

(30) Priority: 25.12.2006 JP 2006347456
(43) Date of publication of application: 09.09.2009
(73) Proprietor: Polyplastics Co., Ltd., Tokyo 108-8280 (JP)
(72) Inventor: KAWAGUCHI, Kuniaki, Fuji-shi Shizuoka 416-8533 (JP); HASE, Hiroyuki, Fuji-shi Shizuoka 416-8533 (JP); KURITA, Hayato, Fuji-shi Shizuoka 416-8533 (JP); IKETANI, Hiraku, Fuji-shi Shizuoka 416-8533 (JP)
(74) Representative: Johnson, Yvonne Catherine
(86) International application number: PCT/JP2007/074071
(87) International publication number: WO 2008/078572

(56) References cited:
- EP-A1- 0 549 338
- EP-A1- 1 522 554
- EP-A1- 2 067 821
- JP-A- 6 248 162
- JP-A- 6 274 854
- JP-A- 06 248 162
- JP-A- 06 274 854
- JP-A- 2001 011 143
- JP-A- 2001 011 143
- JP-A- 2005 112 995
- JP-A- 2009 286 874

## Description

### Technical Field

The present invention relates to a polyacetal resin composition which has excellent processability and stability, significantly suppresses the amount of formaldehyde generated from a molded article thereof, and prevents bleeding of components from the molded article.

### Background Art

Polyacetal resins have excellent characteristics, and the molded articles thereof are used in a wide range of fields. Owing to the features of the chemical structure, polyacetal resins are easily decomposed in a heated oxidizing atmosphere and under an acidic or alkaline condition. Accordingly, the polyacetal resins have a task of retaining high thermal stability to suppress the generation of formaldehyde during the molding process and from the molded articles thereof. If the thermal stability is low, the polymer decomposes by heating during the processing stage such as extrusion or molding, which then produces adhesion materials to mold, (mold deposit), and deteriorates moldability, mechanical properties, and the like. Furthermore, the formaldehyde generated by the decomposition of polyacetal resin is chemically active, thus the formaldehyde is converted into formic acid by oxidation, and adversely affects the heat resistance of the polyacetal resin, and when the polyacetal resin generating large amounts of formaldehyde is used in the parts of electric and electronic equipment, or the like, the generated formaldehyde or the formic acid which is an oxide of the formaldehyde may provide factors of corroding the metallic contact parts and causes discoloration or contact failure by the adhesion of organic compounds. Although the amount of formaldehyde generated from the polyacetal resin molded article is very small under normal use conditions, the generated formaldehyde itself becomes a cause of the contamination of work environments in the parts-assembling process and of use environments of the final products.

Consequently, there are added an antioxidant and other stabilizers for stabilizing the polyacetal resin. There are known antioxidants added to the polyacetal resin, such as a sterically hindered phenol compound (hindered phenol), and a sterically hindered amine compound (hindered amine). Other known stabilizers include melamine, polyamide, alkali-metal hydroxide, and alkali-earth metal hydroxide. In addition, the antioxidant is normally used in combination with other stabilizers. However, sole blending of such a general-use stabilizer in the polyacetal resin having ordinary formaldehyde quality is difficult to significantly reduce the amount of generated formaldehyde, specifically formaldehyde generated from molded article.

Further, to solve the above problems and to reduce the amount of formaldehyde generated, there are disclosed polyacetal resin compositions containing varieties of compounds.

For example, there are disclosed: a polyacetal resin composition containing a polyacetal resin and a glyoxy-diureido compound (JP-A 10-182928 (Claim 1)); a polyacetal resin composition containing a polyacetal resin, and a cyclic nitrogen-containing compound (glycocyamidine such as creatinine, or a derivative thereof) (JP-A 11-335518 (Claim 1)); a polyacetal resin composition containing a polyacetal resin, at least one processing stabilizer selected from polyalkylene glycol, fatty acid ester, fatty acid amide and fatty acid metal salt, and at least one suppressor selected from urea, a derivative thereof and an amidine derivative (JP-A 12-26704 (Claim 1)); a polyacetal resin composition containing a polyacetal resin, a hindered phenol-based compound, a spiro compound having triazine ring, and at least one of processing stabilizer and a heat-resistant stabilizer (JP-A 2003-113289 (Claim 1)); and a polyacetal resin composition containing a polyacetal resin, and a guanamine derivative such as benzoguanamine as a stabilizer (JP-A 62-190248).

In addition, JP 2005-112995 A discloses a polyacetal resin composition composed of a polyacetal copolymer having a specific terminal group, and a formaldehyde inhibitor, with the disclosure of a guanamine compound, a urea-based compound, and a carboxylic acid hydrazide-based compound as the formaldehyde inhibitor.

EP 1 522 554 relates to a polyacetal resin composition that comprises a polyacetal copolymer having a terminal hemiformal group of not more than 1 mmol/kg, a terminal formyl group of not more than 2 mmol/kg, and a melt index of 0.1 to 100 g/10 min, and a formaldehyde emission inhibitor. In this disclosure, a hydrazide compound is used as a formaldehyde-emission inhibitor.

JP 6 274854 relates to a polyacetal resin molded article which is made of polyacetal resin giving a molded article generating formic acid in an amount of ≤1.0µm per 1cm² surface area. The amount of formic acid generated is reduced to the prescribed value or below by adding an antioxidant and an isocyanate compound or a compound of a metal such as Li, K or Mg.

JP 6 248162 relates to a polyacetal resin having an amount of formic acid emitted of 1.0µg or below per cm² of the surface of a molding or 0.5µg or below per g of the resin. This is mixed with 0.01-5wt.% antioxidant, 0.01-10wt.% isocyanate compound and optionally 1×10-4 to 1mol% (in terms of the metals) of metal compound selected from among hydroxides, carbonates and 6 C or higher fatty acid salts of at least one metal selected from among Li, Na, K, Mg, Ga, Ba and Zn. The resulting mixture is molded to obtain a polyacetal resin molding. This molding is combined with a rubber component to obtain electrical or electronic equipment.

JP 2001 011143 relates to a polyoxymethylene copolymer that is stated to have high thermal stability, that has low formaldehyde gas emission when subjected to molding operation. The copolymer is formed by random copolymerization between a monomer having a specific oxymethylene unit and another monomer having a specific copolymerization component unit in specified proportions.

EP 0 549 338 relates to a polyacetal resin composition that is stated to be capable of providing a molding having a remarkably lowered surface gloss, while maintaining the mechanical properties and moldability inherent in polyacetal. The composition comprises: (A) 100 parts by weight of a polyacetal resin and, incorporated therein, (B) 1 to 50 parts by weight of a polyalkylene terephthalate copolymer having a melt flow temperature of 210 DEG C or below, and (C) 0.1 to 10 parts by weight of an isocyanate or isothiocyanate compound, or a modification thereof.

JP 2009 286874 relates to a polyacetal resin composition which is stated to be excellent in processability and stability, yields a molded product generating an extremely small amount of formaldehyde and prevents exudation of compounded components or their deposition onto a die. The polyacetal resin composition comprises (A) 100 pts.wt. polyacetal copolymer having ≤1.0 mmol/kg terminal hemiformal groups, ≤0.5 mmol/kg terminal formyl groups and ≤0.5 wt.% unstable terminal groups, (B) 0.01-3 pts.wt. hindered phenol antioxidant, (C) 0.2-0.5 pts.wt. hydrazide compound and (D) 0.2-1.5 pts.wt. compound chosen from the group consisting of an isocyanate compound, an isothiocyanate compound and modified forms thereof. The compounding ratio (weight ratio) of component (D) to component (C) is adjusted so as to fall within the range of (D)/(C)=2.5-4.0.

EP 2 067 821 relates to a polyacetal resin composition that is stated to have excellent weather resistance and suppressed surface gloss, and to have extremely reduced generation of formaldehyde. The composition is made by blending 100 parts by weight of (A) a polyacetal resin with 0.01 to 5 parts by weight of (B) a weathering (light) stabilizer, 1 to 50 parts by weight of (C) a core-shell polymer having a core of a rubbery polymer and a shell of a glassy polymer composed of a vinyl-based copolymer; and 0.01 to 5 parts by weight of (D) a compound selected from an isocyanate compound, an isothiocyanate compound, and a modified compound thereof.

### Disclosure of the Invention

According to the technologies disclosed in above JP-A 10-182928 (Claim 1), JP-A 11-335518 (Claim 1), JP-A 12-26704 (Claim 1), JP-A 2003-113289 (Claim 1), JP-A 62-190248 , and JP-A 2005-112995 , the generation of formaldehyde from polyacetal resin can be reduced. To significantly reduce the generation of formaldehyde, however, it is necessary to add blending components in a relatively large amount, which unavoidably raises problems of poor appearance and the like caused by bleeding of components from the obtained composition or from the molded article thereof. In particular, it is very difficult to obtain a resin material which suppresses bleeding of components under high temperature and high humidity conditions. In addition, as disclosed in JP-A 2005-112995, the use of a polyacetal copolymer having a specific terminal group tends to increase further the bleeding of components, though the use thereof is effective to reduce the generation of formaldehyde.

An object of the present invention is to provide a polyacetal resin composition which can suppress the generation of formaldehyde from a molded article thereof at an extremely low level, and suppresses the bleeding of components from the molded article.

To achieve the above object, the inventors of the present invention have conducted detail study to develop a polyacetal resin material which can suppress the generation of formaldehyde from the molded article thereof to an extremely low level, and suppresses the bleeding of components therefrom, and have found that the use of a polyacetal copolymer having specific terminal group characteristics as a base resin, with the combined use of an iso(thio)cyanate compound while selecting a stabilizer component to be added, produces unexpected effects of significantly reducing the generation of formaldehyde from the molded article thereof, and further significantly suppressing the bleeding of the components, thus having perfected the present invention.

That is, the present invention relates to a polyacetal resin composition, comprising:
100 parts by weight of (A) a polyacetal copolymer in which the amount of hemiformal terminal group is 1.0 mmol/kg or less, the amount of formyl terminal group is 0.5 mmol/kg or less, and the amount of unstable terminal group is 0.5% by weight or less;
0.01 to 3 parts by weight of (B) a hindered phenol-based antioxidant;
0.01 to 1 part by weight of (C) a hydrazide compound; and
0.01 to 1 part by weight of (D) a compound selected from the group consisting of an isocyanate compound, an isothiocyanate compound and modified compounds thereof,
wherein the amount of such unstable terminal group is determined as follows: one gram of polyacetal copolymer is placed in a pressure-resistant closed container together with 100 ml aqueous solution of 50% (by volume) methanol containing 0.5% by volume of ammonium hydroxide; the mixture is heated to 180°C for 45 minutes, and then is cooled; the container is opened, and the amount of formaldehyde decomposed and eluted in the solution is quantified thereby to express the amount as weight percent to the amount of polyacetal copolymer, which is the amount of the unstable terminal group;
with the proviso that the composition does not comprise both 0.01 to 5 parts by weight of a weathering (light) stabilizer and 1 to 50 parts by weight of a core-shell polymer having a core of a rubbery polymer and a shell of a glassy polymer composed of a vinyl-based copolymer.

The present invention relates also relates to a molded article of the polyacetal resin composition.

According to the present invention, there are provided a polyacetal resin composition having extremely reduced generation of formaldehyde and suppressing bleeding of components, and a molded article thereof.

### Detailed Description of the Invention

The present invention is described in detail in the following.

### (A) Polyacetal copolymer

The present invention uses a polyacetal copolymer (A) having specific terminal characteristics as the base resin. A polyacetal copolymer is a resin having oxymethylene group (-OCH₂-) as a main component unit, and other comonomer units except the oxymethylene unit and is generally manufactured by copolymerization of formaldehyde or a cyclic oligomer of formaldehyde, as a main monomer, with a compound selected from a cyclic ether and a cyclic formal, as a comonomer. The obtained copolymer is normally stabilized against thermal decomposition by removing unstable terminal parts through hydrolysis.

Specifically, the main monomer commonly used is trioxane which is a cyclic trimer of formaldehyde. Trioxane is normally obtained by the reaction of aqueous solution of formaldehyde in the presence of an acidic catalyst, and is used by purifying through a method such as distillation. As described later, the trioxane used for the polymerization is preferably the one containing small amounts of impurities such as water, methanol, or formic acid as far as possible. Examples of the cyclic ether and cyclic formal as the comonomer are ethylene oxide, propylene oxide, butylene oxide, cyclohexene oxide, oxetane, tetrahydrofuran, trioxepane, 1,3-dioxan, 1,3-dioxolane, propylene glycol formal, diethylene glycol formal, triethylene glycol formal, 1,4-butandiol formal, 1,6-hexanediol formal, and the like. Furthermore, a compound which can form branched structure or crosslinked structure can be used as the comonomer (or termonomer), and that type of compound includes: alkyl or aryl glycidyl ethers such as methyl glycidyl ether, ethyl glycidyl ether, butyl glycidyl ether, 2-ethylhexyl glycidyl ether or phenyl glycidyl ether; and diglycidyl ethers of alkylene glycol or polyalkylene glycol, such as ethylene glycol diglycidyl ether, triethylene glycol diglycidyl ether or butandiol diglycidyl ether. These comonomers can be used alone or in combination of two or more of them.

The above polyacetal copolymer can be obtained normally by cationic polymerization through the addition of an adequate amount of molecular-weight adjustor and through the use of a cationic polymerization catalyst. Applicable molecular-weight adjustor, cationic polymerization catalyst, polymerization method, polymerization apparatus, deactivation of catalysts after polymerization, method for stabilizing terminals of crude polyacetal copolymer prepared by the polymerization, and the like are known in many literatures, and any of them can be used basically.

Although the molecular weight of the polyacetal copolymer used in the present invention is not specifically limited, the weight-average molecular weight is preferably within the range of about 10,000 to 400,000. The polyacetal copolymer preferably has the Melt Index (determined at 190°C under 2.16 kg of load, in accordance with ASTM-D1238), which is an index of flowability of the resin, within the range of 0.1 to 100 g/10 min, and more preferably 0.5 to 80 g/10 min.

The polyacetal copolymer (A) used in the present invention is required to have specific terminal characteristics as described above, and in concrete terms, it is essential to have the amount of hemiformal terminal group of 1.0 mmol/kg or less, the amount of formyl terminal group of 0.5 mmol/kg or less, and the amount of unstable terminal group of 0.5% by weight or less. The hemiformal terminal group is represented by -OCH₂OH, and is also referred to as hydroxymethoxy group or hemiacetal terminal group. The formyl group is represented by -CHO. The amount of such hemiformal terminal group and formyl group can be determined by ¹H-NMR, and the detail determination method can be referred to in the method described in JP-A 2001-11143. The amount of unstable terminal group means the amount of a part, existing in the terminal portion of the polyacetal copolymer and being readily decomposed because of the instability against heat and base. The amount of such unstable terminal group is determined as follows: One gram of polyacetal copolymer is placed in a pressure-resistant closed container together with 100 ml aqueous solution of 50% (by volume) methanol containing 0.5% by volume of ammonium hydroxide. The mixture is heated to 180°C for 45 minutes, and then is cooled. After that, the container is opened, and the amount of formaldehyde decomposed and eluted in the solution is quantified thereby to express the amount as weight percent to the amount of polyacetal copolymer, which is the amount of the unstable terminal group.

If the polyacetal copolymer (A) to be used does not have the above terminal characteristics, but has the characteristics of more than the upper limit, the polyacetal resin composition having sufficiently reduced generation of formaldehyde cannot be obtained, and further it becomes difficult to keep the amount of formaldehyde generated by the repeated heat-history at a low level.

In this regard, the polyacetal copolymer (A) used in the present invention preferably has the amount of hemiformal terminal group of 1.0 mmol/kg or less and more preferably 0.6 mmol/kg or less, the amount of formyl terminal group of 0.5 mmol/kg or less and more preferably 0.1 mmol/kg or less, and the amount of unstable terminal group of 0.5% by weight or less and more preferably 0.3% by weight or less. The lower limits of the amount of hemiformal terminal group, the amount of formyl terminal group, and the amount of unstable terminal group are not specifically limited.

The polyacetal copolymer (A) having the above-described specific terminal characteristics can be manufactured by reducing impurities in the monomer and the comonomer, by selecting the manufacturing process, by optimizing the manufacturing conditions, and the like.

Examples of the method for manufacturing the polyacetal copolymer (A) having the specific terminal characteristics satisfying the requirements of the present invention will be given below, but are not limited to these methods.

First, it is important to minimize active impurities which form unstable terminals in polymerization systems, specifically the impurities such as water, alcohol (such as methanol), and acid (such as formic acid) in the monomer and the comonomer. The total amount of these active impurities is preferably regulated to 1 x 10⁻²% by mole or less, and more preferably 5 x 10⁻³% by mole or less, to the amount of total monomers in the reaction systems. Excessive amount thereof is naturally not preferable to obtain the polyacetal polymer having a small amount of unstable terminal parts. In addition, the molecular weight of the polyacetal polymer can be adjusted by adding an arbitrary amount of a chain-transfer agent which does not form unstable terminals, such as linear, low-molecular-weight acetal having alkoxy groups at both terminals, such as methylal.

Examples of catalyst used in the polymerization reaction are: lead tetrachloride; tin tetrachloride; titanium tetrachloride; aluminum trichloride; zinc chloride; vanadium trichloride; antimony trichloride; phosphorus pentafluoride; antimony pentafluoride; boron trifluoride; boron trifluoride coordination compound such as boron trifluoride diethyl etherate, boron trifluoride dibutyl etherate, boron trifluoride dioxanate, boron trifluoride acetic anhydrate, or boron trifluoride triethyl amine complex; inorganic and organic acids such as perchloric acid, acetlyl perchlorate, t-butyl perchlorate, hydroxyl acetic acid, trichloro acetic acid, trifluoro acetic acid, trifluoro methane sulfonic acid, or p-toluene sulfonic acid; complex salt compound such as triethyl oxonium tetrafluoro borate, triphenyl methylhexafluoro antimonite, allyl diazonium hexafluoro phosphate, or allyl diazonium tetrafluoro borate; alkyl metal salt such as diethyl zinc, triethyl aluminum, or diethyl aluminum chloride; heteropoly acid; and isopoly acid. Among them, preferred ones are boron trifluoride, boron trifluoride coordinate compound, heteropolyacid, and trifluoromethane sulfonic acid. These catalysts can be diluted by an organic solvent or the like in advance. When boron trifluoride or a coordinate compound thereof is used as a catalyst, the additive amount of the catalyst is preferably within the range of 5 x 10⁻³ to 1 x 10⁻²% by mole to the total amount of monomer, and is specifically preferable within the range of 1 x 10⁻³ to 7 x 10⁻³% by mole. Limiting the amount of catalyst to the above range is effective in preventing the formation of unstable terminal parts. Excessive amounts of catalyst make the adequate control of polymerization temperature difficult, and the decomposition reaction during the polymerization becomes predominant, which makes it difficult to obtain the polyacetal polymer having a small amount of unstable terminal parts satisfying the requirements of the present invention. On the other hand, an excessively small amount of catalyst is not preferable because the polymerization reaction rate decreases and the polymerization yield decreases.

The amount and the type of comonomer significantly affect the thermal stability of the polyacetal polymer. The polyacetal polymer of the present invention is preferably the one prepared by the copolymerization of trioxane (a-1) with one or more of compound (a-2) selected from cyclic ether and cyclic formal, at a ratio of the former (a-1) to the latter (a-2) from 99.9/0.1 to 80.0/20.0 (by weight), and more preferably from 99.5/0.5 to 90.0/10.0 (by weight). The compound (a-2) selected from cyclic ether and cyclic formal is specifically preferably ethylene oxide, 1,3-dioxolan, 1,4-butandiol formal, and diethylene glycol formal.

Any of the conventionally known polymerization methods are possible. From industrial point of view, however, a preferred one is the continuous bulk polymerization method in which solid powdered and massive polymer is obtained with the progress of polymerization using a liquid monomer, and the polymerization temperature is preferably kept within the range of 60°C to 105°C, specifically 65°C to 100°C.

When a catalyst composed of boron trifluoride or a coordinate compound thereof is used, the method for adding the polymer after polymerization to an aqueous solution containing a basic compound, or the like is possible as a deactivation method of the catalyst after polymerization. In order to obtain the polyacetal polymer satisfying the requirements of the present invention, however, it is preferred to pulverize the polymer obtained by the polymerization reactions into pieces, which are then brought into contact with a deactivator, thus the catalyst being promptly deactivated. For example, it is desirable that the polymer for deactivating the catalyst be pulverized into pieces composed of 1.5 mm or smaller size for 80% by weight or more, preferably 90% by weight or more, and composed of 0.3 mm or smaller size for 15% by weight or more, preferably 20% by weight or more. As a basic compound for neutralizing and deactivating the polymerization catalyst, there can be used: ammonia; or amines such as triethyl amine, tributyl amine, triethanol amine, or tributanol amine; or oxide, hydroxide, and salt of alkali metal and alkali earth metal; and other known catalyst deactivators. The basic compound is preferably added as an aqueous solution at concentrations within the range of 0.001 to 0.5% by weight, specifically 0.02 to 0.3% by weight. Additionally, a preferable temperature of the aqueous solution is within the range of 10°C to 80°C, and more preferably 15°C to 60°C. After the polymerization, it is also preferable to add promptly the polymer to these aqueous solutions thereby to deactivate the catalyst.

Before the polymerization, by adding a hindered phenol-based antioxidant to the monomer within the range of 0.01 to 0.1% by weight to the total amount of monomer, and conducting the polymerization in the presence of the antioxidant uniformly in the polymerization reaction systems, the depolymerization during the polymerization can be suppressed, and thus also the oxidation decomposition during the post-treatment process such as drying and the stabilization process after the polymerization, can be suppressed.

As described above, through the reduction in the amount of impurities in the monomer and the comonomer, the selection of manufacturing process and the optimization of manufacturing conditions, or the like, the polyacetal polymer having a small amount of unstable terminals can be manufactured. If further required, the adoption of stabilization process can further reduce the amount of unstable terminals. Applicable stabilization process includes the one in which the polyacetal polymer is heated at the melting point or higher, and the polyacetal polymer in the molten state is treated thereby to decompose and remove solely the unstable parts, or the one in which the polyacetal polymer is subjected to heat treatment at 80°C or higher while maintaining the heterogeneous system in an insoluble liquid medium, thereby to decompose and remove solely the unstable terminal parts.

According to the present invention, a polyacetal resin having branched or crosslinked structure may be added to the above polyacetal copolymer. On manufacturing the polyacetal resin, the polyacetal resin having branched or crosslinked structure can be copolymerized with formaldehyde, trioxane, and the like, and is obtained by further adding and copolymerizing a compound which can form a branch unit or a crosslinking unit by the copolymerization. For example, on copolymerizing trioxane (i) with a compound (ii) selected from a cyclic ether compound and a cyclic formal compound, which compound (ii) is monofunctional without any substituent, when a monofunctional glycidyl ether compound (such as phenyl glycidyl ether or butyl glycidyl ether) having a substituent is further added thereby to conduct copolymerization, the polyacetal resin having branched structure is obtained. Furthermore, when a polyfunctional glycidyl ether compound is added to conduct the copolymerization, the polyacetal resin having crosslinked structure is obtained. A specifically preferred polyacetal resin to be added is the one having crosslinked structure, preferably the one prepared by the copolymerization of 100 parts by weight of trioxane (i), 0.1 to 10.0 parts by weight of the compound (ii) selected from a monofunctional cyclic ether compound having no substituent and a monofunctional cyclic formal compound having no substituent, and 0.01 to 2.0 parts by weight of a polyfunctional glycidyl ether compound (iii), and specifically preferred one is obtained by the copolymerization of 100 parts by weight of trioxane (i), 0.3 to 3.0 parts by weight of the compound (ii), and 0.02 to 1 part by weight of the polyfunctional glycidyl ether compound (iii). In addition, a crosslinked polyacetal resin having Melt Index of 0.1 to 10 g/min is preferred.

The compound (ii) includes the same as the above, and specifically preferred ones are one or more selected from ethylene oxide, 1,3-dioxolan, 1,4-butandiol formal, and diethylene glycol formal.

Examples of the polyfunctional glycidyl ether compound (iii) include ethylene glycol diglycidyl ether, propylene glycol diglycidyl ether, 1,4-butandiol diglycidyl ether, hexamethylene glycol diglycidyl ether, resorcinol diglycidyl ether, bisphenol A diglycidyl ether, polyethylene glycol diglycidyl ether, polypropylene glycol diglycidyl ether, polybutylene glycol diglycidyl ether, glycerol triglycidyl ether, trimethylol propane triglycidyl ether, pentaerythritol tetraglycidyl ether, sorbitol polyglycidyl ether, sorbitan polyglycidyl ether, polyglycerol polyglycidyl ether, diglycerol polyglycidyl ether, and the like. These compounds can be used alone or in combination of two or more of them for the copolymerization with trioxane (i).

When the polyacetal resin having crosslinked structure is added to the above polyacetal copolymer (A), from the viewpoint of mechanical properties, a specifically preferred polyacetal resin is the one which forms a crosslinking structure by the copolymerization using a compound having 3 to 4 glycidyl ether groups in a single molecule, among the above-given polyfunctional glycidyl ether compounds (iii).

Examples of the specifically preferred polyfunctional glycidyl ether compound (iii) are trimethylol propane triglycidyl ether, glycerol triglycidyl ether and pentaerythritol tetraglycidyl ether.

According to the present invention, when such a polyacetal resin having branched or crosslinked structure for the above polyacetal copolymer (A) is added for use, the blending amount is within the range of 0.1 to 20 parts by weight to 100 parts by weight of the polyacetal copolymer (A), and is specifically preferably 0.3 to 5 parts by weight. If the blending amount of the polyacetal resin having the branched or crosslinked structure is excessive, the molding processability and the like deteriorate, which results in insufficient mechanical properties.

### (B) Hindered phenol-based antioxidant

The hindered phenol-based antioxidant (B) used in the present invention includes a monocyclic hindered phenol compound, a polycyclic hindered phenol compound bonded by a hydrocarbon group or a group containing sulfur atom, and a hindered phenol compound having ester group or amide group.

The above compounds can be exemplified as follows: 2,6-di-t-butyl-p-cresol, 2,2'-methylenebis(4-methyl-6-t-butylphenol), 4,4'-methylenebis(2,6-di-t-butylphenol), 1,1,3-tris(2-methyl-4-hydroxy-5-t-butylphenyl)butane, 4,4'-butylidenebis(3-methyl-6-t-butylphenol), 1,3-5-trimethyl-2-4,6-tris(3,5-di-t-butyl-4-hydroxybenzyl)-benzene, 4,4'-thiobis(3-methyl-6-t-butylphenol), n-octadecyl-3-(4'-hydroxy-3',5'-di-t-butylphenyl)propionate, n-octadecyl-2-(4'-hydroxy-3',5'-di-t-butylphenyl)propionate, 1,6-hexanediol-bis[3-(3,5-di-t-butyl-4-hydroxphenyl)-propionate], ethylenebis(oxyethylene)bis[3-(5-tert-butyl-4-hydroxy-m-tryl)propionate], pentaerythritol tetrakis[3-(3,5-di-t-butyl-4-hydroxyphenyl)propionate], 3,9-bis[2-{3-(3-t-butyl-4-hydroxy-5-methylphenyl)propionyloxy}-1,1-dimethylethyl]-2,4,8,10-tetraoxaspiro[5,5]undecane, 2-t-butyl-6-(3'-t-butyl-5'-methyl-2'-hydroxybenzyl)-4-methylphenylacrylate, 2-[1-(2-hydroxy-3,5-di-t-pentylphenyl)ethyl]-4,6-di-t-pentylphenylacrylate, di-n-octadecyl-3,5-di-t-butyl-4-hydroxybenzylphosphonate, N,N'-hexamethylenebis(3,5-di-t-butyl-4-hydroxy-dihydrocinnamamide, N,N'-ethylenebis[3-(3,5-di-t-butyl-4-hydroxyphenyl)propionamide], N,N'-tetramethylenebis-[3-(3,5-di-t-butyl-4-hydroxyphenyl)propionamide], N,N'-hexamethylenebis[3-(3,5-di-t-butyl-4-hydroxyphenyl)-propionamide], N,N'-ethylenebis[3-(3-t-butyl-5-methyl-4-hydroxyphenyl)propionamide], N,N'-hexamethylenebis[3-(3-t-butyl-5-methyl-4-hydroxyphenyl)propionamide], N,N'-bis[3-(3,5-di-t-butyl-4-hydroxyphenyl)propyonyl]hydrazine, N,N'-bis[3-(3-t-butyl-5-methyl-4-hydroxphenyl)propyonyl]-hydrazine, 1,3,5-tris(3,5-di-t-butyl-4-hydroxybenzyl)-isocyanulate, 1,3,5-tris(4-t-butyl-3-hydroxy-2,6-dimethylbenzyl)isocyanulate, and the like.

These hindered phenol-based antioxidants (B) can be used alone or in combination of two or more of them. The additive amount of the hindered phenol-based antioxidant (B) is within the range of 0.01 to 3 parts by weight to 100 parts by weight of the polyacetal copolymer (A). If the amount is less than that range, the effect becomes insufficient. If the amount is more than that range, problems of coloring, bleeding, and the like may occur.

### (C) Hydrazide compound

Examples of the hydrazide compound (C) used in the present invention include an aliphatic carboxylic acid hydrazide-based compound, an alicyclic carboxylic acid hydrazide-based compound, an aromatic carboxylic acid hydrazide-based compound, hetero atom-containing carboxylic acid hydrazide-based compound, a polymer-type carboxylic acid hydrazide-based compound, and the like. These carboxylic acid hydrazides can be used alone or in combination of two or more of them.

Examples of the aliphatic carboxylic acid hydrazide-based compound include: monocarboxylic acid hydrazide (lauric acid hydrazide, stearic acid hydrazide, 12-hydroxystearic acid hydrazide 1,2,3, 4-butane tetracarboxylic acid hydrazide or the like); polycaboxylatic acid hydrazide such as succinic acid mono- or di-hydrazide, glutaric acid mono- or di-hydrazide, adipic acid mono- or di-hydrazide, pimelic acid mono- or di-hydrazide, suberic acid mono- or di-hydrazide, azelaic acid mono- or di-hydrazide, sebacic acid mono- or di-hydrazide, dodecanedioic acid mono- or di-hydrazide, hexadecane dioic acid mono- or di-hydrazide, eicosandioic acid mono- or di-hydrazide, 7,11-octadecadiene-1,18-dicarbohydrazide, and the like.

Examples of the alicyclic carboxylic acid hydrazide-based compound include: monocarboxylic acid hydrazides such as cyclohexane carboxylic acid hydrazide; and polycarboxylic acid hydrazides such as dimer acid mono- or di-hydrazide, trimer acid mono- to tri-hydrazide, 1,2-, 1,3-, or 1,4-cyclohexane dicarboxylic acid mono- or di-hydrazide, cyclohexane tricaboxylic acid mono- to tri-hydrazide, and the like.

Examples of the aromatic carboxylic acid hydrazide include: mono-carboxylic acid hydrazides (benzoic acid hydrazide and functional group substitution products thereof, such as derivatives where functional groups such as alkyl group, hydroxy group, acetoxy group, amino group, acetoamino group, nitrile group, carboxy group, alkoxycarbonyl group, carbamoyl group, alkoxy group, phenyl group, benzyl group, cumyl group, or hydroxyphenyl group are substituted by 1 to 5 phenyl residues of benzoguanamine (for example, o-toluic acid hydrazide, m-toluic acid hydrazide, p-toluic acid hydrazide, 2,4-, 3,4-, 3,5- or 2,5-dimethyl-benzoic acid hydrazide, o-, m- or p-hydroxy-benzoic acid hydrazide, o-, m- or p-acetoxy-benzoic acid hydrazide, 4-hydroxy-3-phenyl-benzoic acid hydrazide, 4-actoxy-3-phenyl-benzoic acid hydrazide, 4-pheny-benzoic acid hydrazide, 4-(4'-phenyl)benzoic acid hydrazide, 4-hydroxy-3,5-dimethyl-benzoic acid hydrazide, 4-hydroxy-3,5-di-t-butyl-benzoic acid hydrazide, 4-hydroxy-3,5-di-t-butylphenyl-benzoic acid hydrazide, and 4-hydroxy-3,5-di-t-butylphenyl-propionic acid hydrazide); α-or β-naphthoic acid hydrazide and functional substitution products thereof, such as 1-naphthoic acid hydrazide, 2-naphthoic acid hydrazide, 3-hydroxy-2-naphthoic acid hydrazide, or 6-hydroxy-2-naphthoic acid hydrazide; and polycarboxylic acid hydrazides such as isophthalic acid mono-or di-hydrazide, terephthalic acid mono- or di-hydrazide, 1,4-or 2,6-naphthalene dicarboxylic acid mono- or di-hydrazide, 3,3'-, 3,4'- or 4,4'-diphenyldicarboxylic acid mono- or di-hydrazide, diphenylether dicarboxylic acid mono- or di-hydrazide, diphenylmethane dicarboxylic acid mono- or di-hydrazide, diphenylethane dicarboxylic acid mono- or di-hydrazide, diphenoxyethane dicarboxylic acid mono- or di-hydrazide, diphenylsulphone dicarboxylic acid mono- or di-hydrazide, diphenylketone dicarboxylic acid mono- or di-hydrazide, 4,4"-terphenyl dicarboxylic acid mono- or di-hydrazide, 4,4"'-quaterphenyldicarboxylic acid mono- or di-hydrazide, 1,2,4-benzene tricarboxylic acid mono- to tri-hydrazide, pyromellitic acid mono- to tetra-hydrazide, and 1,4,5,8-naphthoic acid mono- to tetra-hydrazide).

Examples of the heteroatom-containing carboxylic acid hydrazide-based compound include: mono- or di-hydrazide of dioxane ring-containing carboxylic acid hydrazides such as 5-methylol-5-ethyl-2-(1,1-dimethyl-2-carboxyethyl)-1,3-diox ane; tetraoxo spiro ring-containing carboxylic acid hydrazides such as mono- or di-hydrazide of 3,9-bis(2-carboxyethyl)-2,4,8,10-tetraoxospiro[5,5]undecane, mono- or di-hydrazide of 3,9-bis(2-methoxycarbonylethyl)-2,4,8,10-tetraoxospiro[5,5] undecane, mono- or di-hydrazide of 3,9-bis(1,1-dimethyl-1-carboxymethyl)-2,4,8,10-tetraoxospir o[5,5]undecane, or mono- or di-hydrazide of 3,9-bis(1,1-dimethyl-1-methoxycarbonylmethyl)-2,4,8,10-tetraoxospiro[5,5]undecane; isocyanuric ring-containing carboxylic acid hydrazides such as mono- to tri-hydrazide of 1,3,5-tris[2-carboxyethyl]isocyanulate, or mono- to tri-hydrazide of 1,3,5-tris(3-caboxypropyl)isocyanurate; and hydantoin ring-containing carboxylic acid hydrazides such as 1,3-bis(2-hydrazinocarbonylethyl)5-isopropyl hydantoin.

The polymer-type carboxylic acid hydrazide-based compounds are exemplified as follows: single polymers or copolymers of poly(meth)acrylic acid hydrazides which may be cross-linked compounds, such as olefin copolymer, vinyl monomer copolymer, styrene copolymer of divinylbenzene crosslinked compound, or bis(meth)acrylic ester crosslinked compound; polymer described in JP-A 55-145529 and JP-A 56-105905; commercially available "amino polyacrylic amide APA" Otsuka Chemical Co., Ltd.; and copolymer described in US patent 3574786.

In the present invention, the additive amount of the above hydrazide compound (C) is within the range of 0.01 to 1.0 part by weight to 100 parts by weight of the polyacetal copolymer (A), and preferably 0.03 to 0.8 parts by weight. When the blending amount of the compound (C) is excessively small, the polyacetal resin composition having fully reduced generation of formaldehyde cannot be obtained and further it becomes difficult to maintain the amount of formaldehyde generated by repeating heat history to a low level. On the other hand, when the blending amount of the compound (C) is excessively large, problems such as deterioration of mechanical properties and poor appearance by bleeding occur.

### (D) Iso(thio)cyanate compound and modified compound thereof

The polyacetal resin composition according to the present invention has features of further adding a component (D) selected from an isocyanate compound, an isothiocyanate compound, and a modified compound thereof in addition of the above (A) to (C) components, which further improves the effect of reducing amount of formaldehyde generated from a molded article achieved by (A) to (C) components, and further suppresses the bleeding of the blending component (C). The above effect attained by adding the compound (D) has not been expected. Specifically, the use of the polyacetal copolymer (A) having specific terminal group characteristics, as a base resin, makes the polyacetal copolymer with inherently poor activity, further inactive, and facilitates the bleeding of the component (C). However, surprisingly, the addition of component (D) significantly suppressed the bleeding of such component (C).

Preferred compound (D) used for the above objective includes an isocyanate compound represented by the formula of O=C=N-R-N=C=O (R: divalent group), an isothiocyanate compound represented by S=C=N-R-N=C=S (R: divalent group), and a modified compound thereof. Examples of the isocyanate compound include 4,4'-methylenebis(phenyl isocyanate), 2,4-trilene diisocyanate, 2,6-trilene diisocyanate, xylene diisocyanate, 1,6-hexamethylene diisocyanate, isophorone diisocyanate, 1,5-naphthalene diisocyanate, 2,2,4-trimethylhexamethylene diisocyanate, and 2,4,4-trimethylhexamethylene diisocyanate. An example of the isothiocyanate compound includes a diisothionate corresponding to the above isocyanate compounds. Examples of the modified compound include these isocyanate compounds of thereabove, a dimer or trimer of an isothiocyanate compound, and a compound in which the isocyanate group (-NCO) is protected in some way. These are all effective, but in consideration of various properties such as discoloration during melt treatment and the like, or safety in handling, specifically preferred compounds are 4,4'-methylenebis(phenylisocyanate), isophorone diisocyanate, 1,5-naphthalene diisocyanate, 1,6-hexamethylene diisocyanate, 2,4-trylene diisocyanate, 2,6-trilene diisocyanate, and modified compounds (or derivatives) such as dimer and trimer thereof.

Although actions and effects of the compound (D) selected from the group consisting from the above isocyanate compound, isothiocyanate compound, and modified compound thereof are not fully clarified, there are expected mechanisms of suppressing bleeding of the component (C) through the reaction between the compound (C) with the compound (D), and of suppressing bleeding of the component (C) through the reaction of the compound (C), the compound (D), and the polyacetal (A).

According to the present invention, the blending amount of the compound (D) selected from the isocyanate compound, the isothiocyanate compound, and a modified compound thereof is within the range of 0.01 to 1 part by weight to 100 parts by weight of the polyacetal resin (A), and preferably 0.01 to 0.8 part by weight. An excessively small amount of the component (D) results in a small effect of reducing the amount of formaldehyde, and fails to produce the effect of suppressing the bleeding of the component (C). On the other hand, the excessive addition of the compound (D) causes problems of increasing the viscosity of molten resin, and exuding the compound (D) itself.

For further improving the thermal stability, the long-term thermal stability, and the like, the polyacetal resin composition of the present invention can contain and is preferable to contain a compound (E) selected from an organic carboxylic acid metal salt, a metal oxide and a metal hydroxide. The additive amount of the compound (E) is preferably within the range of 0.01 to 1 part by weight to 100 parts by weight of the polyacetal copolymer (A).

Examples of an applicable organic carboxylic acid which forms the organic carboxylic acid metal salt are various kinds of aliphatic carboxylic acids containing approximately 1 to 34 carbons and include saturated aliphatic monocarboxylic acid, saturated aliphatic dicarboxylic acid, unsaturated aliphatic monocarboxylic, unsaturated aliphatic dicarboxylic acid, and an oxyacid thereof. These aliphatic dicarboxylic acids may have hydroxyl group. Alternatively, there may be a copolymer of olefin with polymerizable unsaturated carboxylic acids such as (meth)acrylic acid, maleic acid, fumaric acid, maleic acid anhydride, or maleic acid monoethyl. Examples of the organic carboxylic acid metal salt include: alkali metal organic carboxylates such as lithium citrate, potassium citrate, sodium citrate, lithium stearate, or lithium 12-hydroxystearate; alkali earth metal organic carboxylates such as magnesium acetate, calcium acetate, magnesium citrate, calcium citrate, calcium stearate, magnesium stearate, magnesium 12-hydroxystearate, or calcium 12-hydroxystearate; and an ionomer resin. Among these organic carboxylic acid metal salts, there are preferred: alkali earth metal salts such as calcium citrate, magnesium stearate, calcium stearate, magnesium 12-hydroxystearate, or calcium 12-hydroxystearate; and an ionomer resin.

Preferred metal oxide and metal hydroxide are calcium oxide, magnesium oxide, zinc oxide, calcium hydroxide, magnesium hydroxide, and the like.

The polyacetal resin composition of the present invention can further contain, and is preferable to contain, at least one releasing agent (F) selected from a fatty acid ester, a fatty acid amide, a polyoxyalkylene glycol, and a silicone compound in order to improve the mold processability and the like. The adding amount thereof is preferably in a range from 0.01 to 1 part by weight to 100 parts by weight of the polyacetal copolymer (A).

Examples of the fatty acid ester include ethylene glycol mono- or di-palmitic acid ester, ethylene glycol mono- or di-stearic acid ester, ethylene glycol mono- or di-behenic acid ester, ethylene glycol mono- or di-montanic acid, glycerin mono- to tri-palmitic acid ester, glycerin mono- to tri-stearic acid ester, glycerin mono- to tri-behenic acid ester, glycerin mono- to tri-montanic acid ester, pentaerythritol mono- to tetra-palmitic acid ester, pentaerythritol mono- to tetra-stearic acid ester, pentaerythritol mono- to tetra-behenic acid ester, pentaerythritol mono- to tetra-montanic acid ester, polyglycerin tristearic acid ester, trimethylolpropane mono-palmitic acid ester, pentaerythritol mono-undecylic acid ester, sorbitan mono-stearic acid ester, mono- or di-laurate of polyalkylene glycol (such as polyethylene glycol or polypropylene glycol), mono- or di-palmitate thereof, mono- or di-stearate thereof, mono- or di-behenate thereof, mono- or di-montanate thereof, mono- or di-oleate thereof, and mono- or di-linolate thereof.

Examples of the fatty acid amide include: primary acid amides of saturated fatty acids such as caprylic acid amide, lauric acid amide, myristic acid amide, palmitic acid amide, stearic acid amide, arachic acid amide, behenic acid amide, or montanic acid amide; primary acid amide of unsaturated fatty acid such as oleic acid amide; secondary acid amides by the reaction of a saturated and/or an unsaturated fatty acid with a monoamine, such as stearyl stearic acid amid or stearyl oleic acid amide; ethylenediamine-dipalmitic acid amide; ethylenediamine-distearic acid amide (ethylene bisstearyl amide); hexamethylenediamine-distearic acid amide; ethylenediamine-dibehenic acid amide; ethylenediamine-dimontanic acid amide; ethylenediamine-dioleic acid amide; and ethylenediamine-dierucic acid amide. Further example is bisimide having a structure where different acyl groups are bonded to the amine positions of alkylene diamine (such as ethylenediamine-(stearic acid amide) oleic acid amide).

Examples of the polyoxyalkylene glycol include: single polymer or copolymer of alkylene glycols such as ethylene glycol, propylene glycol, or tetramethylene glycol; and a derivative thereof. Examples of the polyoxyalkylene glycol include: polyoxyalkylene glycol such as polyethylene glycol, polypropylene glycol, or polytetramethylene glycol; polyoxyethylene-polyoxypropylene copolymer (such as random or block copolymer); and copolymers such as polyoxyethylene polyoxypropylene glyceryl ether or polyoxyethylene polyoxypropylene monobutyl ether. Among these, preferred ones are the polymers having oxyethylene unit, such as polyethylene glycol, polyoxyethyelne polyoxypropylene copolymer, and a derivative thereof. The average molecular weight of the polyoxyalkylene glycol is within the range of 3 × 10² to 1 × 10⁶, preferably approximately 1 × 10³ to 1 × 10⁵.

The silicone compound includes (poly)organosiloxane. The (poly)organosiloxane can be exemplified as follows: mono-organo siloxane such as dialkyl siloxane (such as dimethyl siloxane), alkylaryl siloxane (such as phenylmethyl siloxane), or diaryl siloxane (such as diphenyl siloxane) ; single polymers thereof (such as polydimethyl siloxane or polyphenylmethyl siloxane); and copolymer thereof. In addition, the polyorgano siloxane may be an oligomer. Further, the (poly)organo siloxane includes a modified (poly)organo siloxane having a substituent such as epoxy group, hydroxyl group, alkoxy group, carboxyl group, amino group or substituted amino group (such as dialkylamino group), ether group, vinyl group, or (meth)acroyl group at the molecular terminal or in the main chain.

To the polyacetal resin composition according to the present invention, there can further be added weather (light) stabilizer, impact resistance modifier, gloss-controlling agent, sliding property modifier, filler, coloring agent, nucleation agent, antistatic agent, surfactant, antibacterial agent, antifungal agent, aroma, foaming agent, compatibility agent, property modifier (such as boric acid and derivatives thereof), perfume, and the like. The various properties corresponding to each additive can be improved without adversely affecting the object of the present invention. Furthermore, there can be simultaneously used an antioxidant, a heat-resistant stabilizer, a processing modifier, and the like, other than the above additives.

Examples of the weather (light) stabilizer include (a) a benzotriazole-based compound, (b) a benzophenone-based compound, (c) an aromatic benzoate-based compound, (d) a cyanoacrylate-based compound, (e) an oxanilide-based compound, (f) a hydroxyphenyl-1,3,5-triazine-based compound, and (g) a hindered amine-based compound.

Examples of the (a) benzotriazole-based compound include: bebzotriazoles having hydroxyl group and alkyl(C₁₋₆ alkyl)group-substituted aryl group, such as 2-(2'-hyroxy-5'-methylphenyl)benzotriazole, 2-(2'-hydroxy-3',5'-di-t-butylphenyl)benzotriazole, 2-(2'-hydroxy-3',5'-di-t-amylphenyl)benzotriazole, or 2-(2'-hydroxy-3',5'-diisoamylphenyl)benzotriazole; benzotriazoles having hydroxyl group and aralkyl(or aryl)group-substituted aryl group, such as 2-[2'-hydroxy-3',5'-bis(α,α-dimethylbenzyl)phenyl]benzotriazole; and benzotriazoles having hydroxyl group and alkoxy(C₁₋₁₂ alkoxy)group-substituted aryl group, such as 2-(2'-hydroxy-4'-octoxyphenyl)benzotriazole. Preferred benzotriazole-based compound includes benzotriazoles having hydroxyl group and C₃₋₆ alkyl group-substituted C₆₋₁₀ aryl (specifically phenyl) group, and benzotriazoles having hydroxyl group and C₆₋₁₀ aryl-C₁₋₆ alkyl (specifically phenyl C₁₋₄ alkyl)group-substituted aryl group.

Examples of the benzophenone-based compound (b) include: benzophenones having pluralities of hydroxyl groups, (di- to tetra-hydroxybenzophenone such as 2,4-dihydroxybenzophenone, benzophenone having hydroxyl group and hydroxyl-substituted aryl group or aralkyl group, such as 2-hydroxy-4-oxybenzylbenzophenone or the like); and benzophenones having hydroxyl group and alkoxy (C₁₋₁₆ alkoxy) group, (such as 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone or 2-hydroxy-4-methoxy-5-sulfobenzophenone). Preferred benzophenone-based compound includes benzophenones having hydroxyl group and hydroxyl group-substituted C₆₋₁₀ aryl (or C₆₋₁₀ aryl-C₁₋₄ alkyl)group, specifically benzophenones having hydroxyl group and hydroxyl group-substituted phenyl C₁₋₂ alkyl group.

The aromatic benzoate-based compound (c) includes alkylphenylsalicylate such as p-t-butylphenylsalicylate-p-octylphenylsalicylate.

The cyanoacrylate-based compound (d) includes cyano group-containing diphenylacrylates such as 2-ethylhexyl-2-cyano-3,3-diphenylacrylate or ethyl-2-cyano-3,3-diphenylacrylate.

The oxanilide-based compound (e) includes a diamide oxalate having phenyl group, which may be substituted on the nitrogen atom, such as N-(2-ethyl-phenyl)-N'-(2-ethoxy-5-t-butylphenyl)diamide oxalate, or N-(2-ethylphenyl)-N'-(2-ethoxy-phenyl)diamide oxalate.

The hydroxyphenyl-1,3,5-triazine-based compound (f) includes: di C₆₋₁₅ aryl- (hydroxyl-C₁₋₂₀ alkoxyphenyl)-1, 3-5-triazines such as
2,4-diphenyl-6-(2-hydroxyphenyl)-1,3,5-triazine,
2,4-diphenyl-6-(2,4-dihydroxyphenyl)-1,3-5-triazine,
2,4-diphenyl-6-(2-hydroxy-4-methoxyphenyl)-1,3,5-triazine,
2,4-diphenyl-6-(2-hydroxy-4-ethoxyphenyl)-1,3,5-triazine,
2,4-diphenyl-6-(2-hydroxy-4-propoxyphenyl)-1,3,5-triazine,
2,4-diphenyl-6-(2-hydroxy-4-butoxyphenyl)-1,3,5-triazine,
2,4-diphenyl-6-(2-hydroxy-4-hexyloxyphenyl)-1,3,5-triazine,
2,4-diphenyl-6-(2-hydroxy-4-octyloxyphenyl)-1,3,5-triazine,
2,4-diphenyl-6-(2-hydroxy-4-dodecyloxyphenyl)-1,3,5-triazine,
2,4-di-p-6-toluyl-6-(2-hydroxy-4-methoxyphenyl)-1,3,5-triazine,
2,4-di-p-toluyl-6-(2-hydroxy-4-propoxyphenyl)-1,3,5-triazine,
2,4-di-p-toluyl-6-(2-hydroxy-4-butoxyphenyl)-1,3,5-triazine,
2,4-di-p-toluyl-6-(2-hydroxy-4-hexyloxyphenyl)-1,3,5-triazine,
2,4-di-p-toluyl-6-(2-hydroxy-4-pentoxyphenyl)-1,3,5-triazine,
2,4-di-p-toluyl-6-(2-hydroxy-4-octyloxyphenyl)-1,3,5-triazine,
2,4-di(2,4-dimethylphenyl)-6-(2-hydroxy-4-methoxyphenyl)-1,3,5-triazine,
2,4-di(2,4-dimethylphenyl)-6-(2-hydroxy-4-propoxyphenyl)-1,3,5-triazine,
2,4-di(2,4-dimethylphenyl)-6-(2-hydroxy-4-butoxyphenyl)-1,3,5-triazine, or
2,4-di(2,4-dimethylphenyl)-6-(2-hydroxy-4-hexyloxyphenyl)-1,3,5-triazine; di C₆₋₁₅ aryl-(hydroxyl-C₆₋₁₀ aryl C₁₋₄ alkyloxyphenyl)-1,3,5-triazines such as
2,4-diphenyl-6-(2-hydroxy-4-benzyloxyphenyl)-1,3,5-triazine,
2,4-di-p-toluyl-6-(2-hydroxy-4-benzyloxyphenyl)-1,3,5-triazine, or 2,4-di(2,4-dimethylphenyl)-6-(2-hydroxy-4-benzyloxyphenyl)-1,3,5-triazine; and di C₆₋₁₅ aryl-(hydroxy-C₁₋₁₀ alkoxyethoxy-phenyl)-1,3,5-triazines such as 2,4-diphenyl-6-(2-hydroxy-4-(2-butoxyethoxy)phenyl)-1,3,5-triazine, or 2,4-di-p-toluyl-6-(2-hydroxy-4-(2-hexyloxyethoxy)phenyl)-1,3,5-tirazine.

The hindered amine-based compound (g) includes: piperidine derivatives having a sterically hindered group, such as ester group-containing piperidine derivatives, (including aliphatic acyloxy piperidines (C₂₋₂₀ aliphatic acyloxy-tetramethyl piperidine, and the like) such as 4-acetoxy-2,2,6,6-tetramethylpiperidine, 4-stearoyloxy-2,2,6,6-tetramethylpiperidine, or 4-acryloyloxy-2,2,6,6-tetramethylpiperidine); aromatic acyloxypiperidines (C₇₋₁₁ aromatic acyloxytetramethylpiperidine, and the like) such as 4-benzoyloxy-2,2,6,6-tetramethylpiperidine; aliphatic di- or tri-carboxylic acid-bis or trispiperidylesters (C₂₋₂₀ aliphatic dicarboxylic acid-bispiperidylester, and the like) such as bis(2,2,6,6-tetramethyl-4-piperidyl)oxalate, bis(2,2,6,6-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate, or bis(1,2,2,6,6-pentamethyl-4-piperidyl)sebacate; and aromatic di- to tetra-carboxylic acid-bis- to tetrakis-piperidylesters, (aromatic di- or tri-carboxylic acid-bis- or tris-piperidylester, and the like), such as bis(2,2,6,6-tetramethyl-4-piperidyl)terephthalate, or tris(2,2,6,6-tetramethyl-4-piperidyl)benzene-1,3,5-tricarbo xylate); an ether group-containing piperidine derivative, (such as C₁₋₁₀ alkoxypiperidine (C₁₋₆ alkoxy-tetramethylpiperidine and the like) such as 4-methoxy-2,2,6,6-tetramethylpiperidine; C₅₋₈ cycloalkyloxypiperidine such as 4-cyclohexyloxy-2,2,6,6-tetramethylpiperidine; C₆₋₁₀ aryloxypiperidine such as 4-phenoxy-2,2,6,6-tetramethylpiperidine; C₆₋₁₀ aryl-C₁₋₄ alkyloxypiperidine such as 4-benzyloxy-2,2,6,6-tetramethylpiperidine; or alkylenedioxybispiperidine (C₁₋₁₀alkyleneoxybispiperidine and the like) such as 1,2-bis(2,2,6,6-tetramethyl-4-piperidyloxy)ethane); and amide group-containing piperidine derivatives (such as carbamoyloxypiperidine such as 4-(phenylcarbamoyloxy)-2,2,6,6-tetramethylpiperidine; carbamoyloxy-substituted alkylenedioxy-bispiperidine such as bis(2,2,6,6-tetramethyl-4-piperidyl)hexamethylene-1,6-dicarbamate]. Other examples include high-molecular-weight piperidine derivative polycondensates (such as polycondensate of dimethylsuccinate-1-(2-hydroxyethyl)-4-hydroxy-2,2,6,6-tetramethylpiperidine, or poly{6-[(1,1,3,3-tetramethylbutyl)imino-1,3,5-triazine-2,4-diyl][2-(2,2,6,6-tetramethylpiperidyl)amino]hexamethylene[4-(2,2,6,6-tetramethylpiperidyl)imino]}).

The weather (light) stabilizer may be used alone or in combination of two or more of same or different compounds thereof. The weather stabilizer is preferably used in combination of the hindered amine-based compound (g) with at least one selected from other weather (light) stabilizers (a) to (f), and specifically preferred combination is the benzotriazole-based compound (a) with the hindered amine-based compound (f). The additive amount of the weather (light) stabilizer is, for example, within the range of 0 to 5 parts by weight (for example, 0.01 to 5 parts by weight) to 100 parts by weight of the polyacetal copolymer, preferably 0.1 to 4 parts by weight, and may be more preferably about 0.1 to 2 parts by weight.

The impact resistance modifier includes thermoplastic polyurethane-based resin, acrylic-based core-shell polymer, thermoplastic polyester-based elastomer, styrene-based elastomer, olefin-based elastomer, polyamide-based elastomer, and a rubber component (such as natural rubber).

The gloss-controlling agent includes an acrylic-based core-shell polymer, a thermoplastic polyurethane, a thermoplastic polyester elastomer, a polyamide-based elastomer, one single polymer or a copolymer of an alkyl (meth)acrylate (such as a polymethylmethacrylate), a polycarbonate-based resin, a styrene-based resin (such as a polystyrene, an AS resin or an AES resin), and such as an olefin-based resin (such as a polypropylene or a cyclic polyolefin).

The sliding property modifier includes an olefin-based polymer (such as a polyethylene, a polypropylene, a copolymer of ethylene with α-olefin or a modified compound derived from these acid anhydrides thereof), wax (such as a polyethylene wax), silicone oil and a silicone-based resin, a fluorine-based resin (such as a polytetrafluoroethylene), and a fatty acid ester.

The filler includes: inorganic or organic fibrous fillers such as glass fiber, carbon fiber, boron fiber, potassium titanate fiber, metal fiber or aramid fiber; plate-like fillers such as glass flake, mica or graphite; and powder-particle fillers such as milled fiber, glass bead, glass balloon, talc, kaolin, silica, diatom earth, clay, wollastonite, alumina, graphite fluoride, silicon carbide, boron nitride or metal powder.

As a coloring agent, varieties of dyes and pigments can be used. The dyes can be exemplified as follows: azo-based dye, anthraquinone-based dye, phthalocyanine-based dye, naphthoquinone-based dye, and the like. The pigments may be any of inorganic pigments and organic pigments. The inorganic pigment can be exemplified as follows: titanium-based pigment, zinc-based pigment, carbon black, iron-based pigment, molybdenum-based pigment, cadmium-based pigment, lead-based pigment, cobalt-based pigment, and aluminum-based pigment. The organic pigment can be exemplified as follows: azo-based pigment, anthraquinone-based pigment, phtharocyanine-based pigment, quinacridone-based pigment, perylene-based pigment, perynone-based pigment, isoindoline-based pigment, dioxazine-based pigment, and threne-based pigment. Among these, the use of carbon black, titanium oxide, phtharocyanine-based pigment, and perylene-based pigment, which are coloring agents having high light-shielding effect, can also improve the weather (light) resistance. The amount of the coloring agent to be added is not specifically limited, and the amount for ordinary coloring object is applied.

The method for manufacturing the polyacetal resin composition according to the present invention is not specifically limited, and the polyacetal resin composition can be manufactured by various kinds of conventionally known methods. For example, applicable methods are (1) the one for mixing all components constituting the composition, and then the mixture is supplied to an extruder thereby to melt and knead the mixture, thus the composition in pellet shape being obtained; (2) the one for supplying a portion of the components constituting the composition from the main feed opening of an extruder, while supplying residual components from a side feed opening, thereby to melt and knead the components, thus the composition in pellet shape being obtained; and (3) the one for preparing pellets having different compositions from each other by extrusion or the like, and then for mixing the pellets thereby to prepare the intended composition.

In the preparation of the composition using an extruder, an extruder which has one or more degassing-vent opening is preferably used. Furthermore, it is preferable that water and a low-boiling alcohol be supplied to an arbitrary position between the main feed opening and the degassing-vent opening at a rate of about 0.1 to about 10 parts by weight to 100 parts by weight of the polyacetal resin, thereby to degas and remove formaldehyde and the like generated in the extrusion process along with the water and low-boiling alcohol from the degassing-vent opening. By this operation, the amount of formaldehyde generated from the polyacetal resin composition and the molded article thereof can further be reduced.

Thus manufactured polyacetal resin composition of the present invention can be molded by various types of conventionally known molding methods including injection molding, extrusion molding, compression molding, vacuum molding, blow molding, and foaming molding.

The present invention also includes the recycling of molded articles composed of the above polyacetal resin composition and of the above-described colored polyacetal resin composition. In concrete terms, they are the recycled resin composition prepared by melt-kneading and extruding the molded article or pulverized molded article composed of these resin compositions alone or together with resin material or molded article having the same composition thereeach or different composition therefrom, and the recycled molded article prepared by melting and kneading to mold the molded article or pulverized molded article composed of these resin compositions separately or together with resin material or molded article having the same composition thereeach or different composition therefrom. The recycled resin composition and the recycled molded article thus prepared by the repeated melt-heat history are also the ones which maintain the amount of generated formaldehyde at an extremely low level as with the polyester resin composition to be the basis for these recycled resin composition and recycled molded article.

### Examples

The present invention will be explained below by means of Examples, but is not limited to them. Every "part" referred to in Examples and Comparative Examples represent part by weight. Characteristics evaluated in Examples and Comparative Examples and methods of the evaluation are as follows.

### (1) Amount of formaldehyde generated from molded article

Using the polyacetal resin compositions prepared in Examples and Comparative Examples, the tabular test pieces (100 mm x 40 mm x 2 mm thick) were molded under the condition given below. Two sheets of the test pieces were sealed and deaerated in a 10 L sampling bag made of vinyl fluoride. Then 4 L of nitrogen gas was introduced in the bag, which was then heated for 2 hours at 65°C. After that, the nitrogen gas in the sampling bag was withdrawn by 3 L at a rate of 0.5 ml/min thereby to adsorb the generated formaldehyde in a collection tube of DNPH (2,4-dinitrophenylhydrazine), (Sep-Pak DNPH-Silica, manufactured by Waters, Inc.). Then, the reaction product of DNPH with formaldehyde was extracted with solvent acetonitrile from the DNPH collection tube, and the amount of the generated formaldehyde was determined by a high-performance liquid chromatograph applying the calibration curve method using a reference substance of the reaction product of DNPH and formaldehyde. Thus the amount of the generated formaldehyde (µg/g) per unit weight of the test piece was calculated.
* Molding machine: J75E-P produced by Japan Steel Works, Ltd.
* Molding condition:

| | | | | |
|---|---|---|---|---|
| Cylinder temperature (°C) | Nozzle | - C1 | - C2 | - C3 |
| | 190 | 190 | 180 | 160 |
| Injection pressure: 60 (MPa) | | | | |
| Injection rate: 1.0 (m/min) | | | | |
| Mold temperature: 50 (°C) | | | | |

### (2) Amount of bleeding from molded article

The sheet-shape test pieces molded in (1) were allowed to stand for 96 hours in a thermostat set at 65°C and 90 RH %. After that, the bleeding material appeared on the surface of the molded article was visually observed, and the amount of bleeding was determined based on the following criteria.
0: No bleeding material was observed.
1: Slight bleeding material was observed in a part of the molded article.
2: Bleeding material was observed in a part of the molded article.
3: Bleeding material was observed on the whole surface of the molded article.

### Examples 1 to 6

To the polyacetal copolymer (A), there were blended the hindered phenol-based antioxidant (B), the formaldehyde scavenger (hydrazide compound) (C), the isocyanate compound (D), and other compounds at the composition shown in Table 1. From the mixture, the pellet-shape compositions were prepared by melt-kneading the mixture in a 30 mm twin-screw extruder. From thus prepared pellets, the test pieces were molded using an injection molding machine under the above molding conditions (1). The amount of formaldehyde generated from the molded article was determined. Further, the bleeding material from the molded article was observed. The result is shown in Table 1.

### Comparative Examples 1 to 5

As shown in Table 1, when any one or more components of the formaldehyde scavenger (C) and the isocyanate compound (D) were not added, or when a polyacetal copolymer which do not satisfy the specification of the terminal group according to the present invention was used as the polyacetal copolymer (A), the compositions were prepared in the same manner as that in Examples, and the properties of them were evaluated. The result is shown in Table 1.

The components used in Examples and Comparative Examples are shown as follows.

### · Polyacetal copolymer (A)

a-1: Polyacetal copolymer (amount of hemiformal terminal group = 0.38 mmol/kg, amount of formyl terminal group = 0.03 mmol/kg, amount of unstable terminal group = 0.15% by weight, Melt Index = 9 g/10 min)
a-2: Polyacetal copolymer (amount of hemiformal terminal group =1.20 mmol/kg, amount of formyl terminal group = 0.60 mmol/kg, amount of unstable terminal group = 0.6% by weight, Melt Index = 9 g/10 min)

Both the polyacetal copolymers a-1 and a-2 were prepared by the following procedure.

To a continuous polymerization apparatus of twin-shaft paddle type, there was continuously supplied a mixture of 96.7% by weight of trioxane and 3.3% by weight of 1,3-dioxolan, and further 15 ppm of boron trifluoride as a catalyst thereby to conduct the polymerization. The mixture of trioxane and 1,3-dioxolan to be subjected to the polymerization contained 0.03% by weight of pentaerythritol-tetrakis[3-(3,5-di-t-butyl-4-hydroxyphenyl)propionate] to the total amount of the mixture. The mixture of trioxane and 1,3-dioxolan to be subjected to the polymerization contained 6 ppm of water, 3.5 ppm of methanol, and 5 ppm of formic acid as impurities.

To the polymer discharged from the discharge opening of the polymerization apparatus, an aqueous solution of 1000 ppm triethylamine was immediately added, which was then immediately pulverized and agitated thereby to deactivate the catalyst. Then, the mixture was centrifuged and dried to obtain crude polyoxymethylene copolymer.

After that, the crude polyoxymethylene copolymer was supplied to a twin-screw extruder having a vent opening. By melt-kneading the copolymer at about 220°C of resin temperature, the unstable terminal parts was decomposed, and the volatile matter containing decomposed products was degassed from the vent opening by depressurizing the system. By cooling and cutting the polymer discharged from the die of the extruder, the pellet-shaped polyacetal copolymer a-2, the unstable terminal parts having been removed, was obtained.

Then, using a cylindrical pressure-resistant vessel which can retain heat, the pellet-shape polymer was continuously supplied from top thereof, while supplying an aqueous solution at 135°C containing 500 ppm of triethylamine from bottom thereof thereby to conduct the treatment for 8 hours. After that, the mixture was centrifuged and dried to obtain the polyacetal copolymer a-1 having further reduced amounts of hemiformal terminal group, formyl terminal group, and unstable terminal group.

The amount of hemiformal terminal group and of formyl terminal group of the polyacetal copolymer is the value (mmol/kg) determined by a method based on the description of JP-A 2001-11143 using Model AVANCE400 FT-NMR produced by Bruker Inc. The above Melt Index is the value (g/10 min) determined under the conditions of 190°C and 2160 g in accordance with ASTM-D1238.
• Antioxidant (B)
   b-1: Pentaerythritol
   tetrakis[3-(3,5-di-t-butyl-4-hydroxyphenyl)propionate]
• Hydrazide compound (C)
   c-1: Sebacic acid hydrazide
   c-2: Dodecane dioic acid dihydrazide
   c-3: Stearic acid hydrazide
• Isocyanate compound (D)
   d-1: Isophoronediisocyanate (trimer) (VESTANAT® T1890/100)
   d-2: Isophoronediisocyanate (monomer) (VESTANAT® IPDI)
• Metal compound (E)
   e-1: Calcium 12-hydroxystearate
• Releasing agent (F)
   f-1: Glycerin mono-stearate
   f-2: Ethylene bis-stearyl amide
   f-3: Stearyl stearate

**Table 1**

| | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| Polyacetal copolymer (A) | (type) | a-1 | a-1 | a-1 | a-1 | a-1 | a-1 | a-1 | a-1 | a-1 | a-1 | a-2 |
| | (parts by weight) | 100 | 100 | 100 | 100 | 100 | 100 | 100 | 100 | 100 | 100 | 100 |
| Hindered phenol-based antioxidant (B) | (type) | b-1 | b-1 | b-1 | b-1 | b-1 | b-1 | b-1 | b-1 | b-1 | b-1 | b-1 |
| | (parts by weight) | 0.30 | 0.30 | 0.30 | 0.30 | 0.30 | 0.30 | 0.30 | 0.30 | 0.30 | 0.30 | 0.30 |
| Hydrazide compound (C) | (type) | c-1 | c-2 | c-3 | c-3 | c-3 | c-1 | c-1 | c-2 | c-3 | | c-1 |
| | (parts by weight) | 0.15 | 0.11 | 0.39 | 0.39 | 0.39 | 0.15 | 0.15 | 0.11 | 0.39 | | 0.15 |
| isocyanate compound (D) | (type) | d-1 | d-1 | d-1 | d-1 | d-1 | d-2 | | | | | d-1 |
| | (parts by weight) | 0.30 | 0.30 | 0.10 | 0.30 | 0.50 | 0.30 | | | | | 0.30 |
| Metal compound (E) | (type) | e-1 | e-1 | e-1 | e-1 | e-1 | e-1 | e-1 | e-1 | e-1 | e-1 | e-1 |
| | (parts by weight) | 0.05 | 0.05 | 0.05 | 0.05 | 0.05 | 0.05 | 0.05 | 0.05 | 0.05 | 0.05 | 0.05 |
| Releasing agent (F) | (type) | f-1 | f-2 | f-3 | f-3 | f-3 | f-1 | f-1 | f-2 | f-3 | f-1 | f-1 |
| | (parts by weight) | 0.18 | 0.18 | 0.20 | 0.20 | 0.20 | 0.18 | 0.18 | 0.18 | 0.20 | 0.18 | 0.18 |
| Amount of formaldehyde generated from molded article (µg/g) | | 0.06 | 0.07 | 0.05 | 0.03 | 0.03 | 0.05 | 0.05 | 0.06 | 0.05 | 0.78 | 0.36 |
| Amount of bleeding material from molded article | | 0 | 0 | 1 | 1 | 0 | 0 | 3 | 3 | 3 | 0 | 0 |

## Claims

1. A polyacetal resin composition, comprising:
100 parts by weight of (A) a polyacetal copolymer in which the amount of hemiformal terminal group is 1.0 mmol/kg or less, the amount of formyl terminal group is 0.5 mmol/kg or less, and the amount of unstable terminal group is 0.5% by weight or less;
0.01 to 3 parts by weight of (B) a hindered phenol-based antioxidant;
0.01 to 1 part by weight of (C) a hydrazide compound; and
0.01 to 1 part by weight of (D) a compound selected from the group consisting of an isocyanate compound, an isothiocyanate compound and modified compounds thereof,
wherein the amount of such unstable terminal group is determined as follows: one gram of polyacetal copolymer is placed in a pressure-resistant closed container together with 100 ml aqueous solution of 50% (by volume) methanol containing 0.5% by volume of ammonium hydroxide; the mixture is heated to 180°C for 45 minutes, and then is cooled; the container is opened, and the amount of formaldehyde decomposed and eluted in the solution is quantified thereby to express the amount as weight percent to the amount of polyacetal copolymer, which is the amount of the unstable terminal group;
with the proviso that the composition does not comprise both 0.01 to 5 parts by weight of a weathering (light) stabilizer and 1 to 50 parts by weight of a core-shell polymer having a core of a rubbery polymer and a shell of a glassy polymer composed of a vinyl-based copolymer.

2. The polyacetal resin composition according to claim 1, wherein the (D) compound is at least one selected from the group consisting of a diisocyanate compound, a diisothiocyanate compound, dimers thereof and trimers thereof.

3. The polyacetal resin composition according to claim 1 or claim 2, wherein the (D) compound is at least one selected from the group consisting of 4,4'-methylenebis-(phenylisocyanate), isophorone diisocyanate, 1,5-naphthalene diisocyanate, 1,6-hexamethylene diisocyanate, 2,4-tolylene diisocyanate, 2,6-tolylene diisocyanate, dimers thereof, and trimers thereof.

4. The composition according to any one of claims 1 to 3, further comprising 0.01 to 1 part by weight of (E) at least one metal compound selected from the group consisting of a metal oxide, a metal hydroxide, and an organic carboxylic acid metal salt to 100 parts by weight of the (A) polyacetal copolymer.

5. The composition according to any one of claims 1 to 4, further comprising 0.01 to 1 part by weight of (F) at least one releasing agent selected from the group consisting of a fatty acid ester, a fatty acid amide, a polyoxyalkylene glycol, and a silicone compound to 100 parts by weight of the (A) polyacetal copolymer.

6. A polyacetal resin molded article, prepared by molding the composition according to any one of claims 1 to 5.

## Patentansprüche

1. Eine Polyacetalharzzusammensetzung bestehend aus:
100 Gew.-Teilen (A) eines Polyacetalcopolymers, bei dem die Menge der halbformalen endständigen Gruppe 1,0 mmol/kg oder weniger beträgt, die Menge der endständigen Formylgruppe 0,5 mmol/kg oder weniger beträgt und die Menge der instabilen endständigen Gruppe 0,5 Gew.-% oder weniger beträgt,
0,01 bis 3 Gew.-Teilen (B) eines gehinderten Antioxidants auf Phenolbasis,
0,01 bis 1 Gew.-Teilen (C) einer Hydrazidverbindung; und
0,01 bis 1 Gew.-Teilen (D) einer Verbindung, die aus der Gruppe bestehend aus einer Isocyanatverbindung, einer Isothiocyanatverbindung und einer modifizierten Verbindung dieser ausgewählt wird,
wobei die Menge einer solchen instabilen endständigen Gruppe wie folgt bestimmt wird:
ein Gramm Polyacetalpolymer wird in einen druckbeständigen, geschlossenen Behälter zusammen mit 100 ml wässriger Lösung von 50% (Volumenprozent) Methanol, das 0,5 Volumenprozent Ammoniumhydroxid enthält, gegeben; die Mischung wird 45 Minuten auf 180°C erwärmt und dann abgekühlt; der Behälter wird geöffnet und die Menge des in der Lösung zersetzten und eluierten Formaldehyds wird quantifiziert, wodurch die Menge als Gewichtsprozent zur Menge des Polyacetalpolymers ausgedrückt wird, was die Menge der instabilen endständigen Gruppe ist;
vorausgesetzt, dass die Zusammensetzung nicht sowohl 0,01 bis 5 Gew.-Teile eines Witterungs-(Licht-)stabilisators als auch 1 bis 50 Gew.-Teile eines Kern-Schale-Polymers mit einem Kern eines gummiartigen Polymers und einer Schale eines glasartigen Polymers bestehend aus einem Copolymer auf Vinylbasis enthält.

2. Die Polyacetalharzzusammensetzung entsprechend Anspruch 1, wobei die (D) Verbindung zumindest aus der Gruppe bestehend aus einer Diisocyanatverbindung, einer Diisothiocyanatverbindung, Dimere dieser und Trimere dieser ausgewählt wird.

3. Die Polyacetalharzzusammensetzung entsprechend Anspruch 1 oder Anspruch 2, wobei die (D) Verbindung zumindest aus der Gruppe bestehend aus 4,4'-Methylenbis-(Phenylisocyanat), Isophoron-Diisocyanat, 1,5-Naphthalen-Diisocyanat, 1,6-HexamethylenDiisocyanat, 2,4-Tolylen-Diisocyanat, Dimere dieser und Trimere dieser ausgewählt wird.

4. Die Polyacetalharzzusammensetzung entsprechend der Ansprüche 1 bis 3, die zudem 0,01 bis 1 Gew.-Teil von (E) zumindest einer Metallverbindung umfasst, die aus der Gruppe bestehend aus einem Metalloxid, einem Metallhydroxid und einem organischen Carboxylsäuremetallsalz zu 100 Gew.-Teilen des (A) Polycetalcopolymers ausgewählt wird.

5. Die Polyacetalharzzusammensetzung entsprechend der Ansprüche 1 bis 4, die zudem 0,01 bis 1 Gew.-Teile von (F) zumindest einem Trennmittel umfasst, das aus der Gruppe bestehend aus einem Fettsäureester, einem Fettsäureamid, einem Polyoxyalkylenglycol und einer Silikonverbindung zu 100 Gew.-Teilen des (A) Polyacetalcopolymers ausgewählt wird.

6. Ein Polyacetalharzformkörper, der durch Formen des Zusammensetzung entsprechend einem der Ansprüche 1 bis 5 erstellt wird.

## Revendications

1. Une composition à base de résine polyacétalique, contenant :
100 parties en poids de (A) un copolymère polyacétalique dans lequel la quantité de groupe terminal hémiformal est de 1,0 mmol/kg ou moins, la quantité de groupe terminal formyle est de 0,5 mmol/kg ou moins et la quantité de groupe terminal instable est de 0,5% en poids ou moins,
0,01 à 3 parties en poids de (B) un antioxydant à base de phénol encombré,
0,01 à 1 partie en poids de (C) un composé d'hydrazide, et
0,01 à 1 partie en poids de (D) un composé sélectionné dans le groupe se composant d'un composé d'isocyanate, d'un composé d'isothiocyanate et de composés modifiés de ceux-ci,
où la quantité d'un tel groupe terminal instable est déterminée comme suit : un gramme de copolymère polyacétalique est placé dans un récipient fermé résistant à la pression conjointement avec 100 ml de solution aqueuse de 50% (en volume) de méthanol contenant 0,5% par volume d'hydroxyde d'ammonium ; le mélange est chauffé à 180°C pendant 45 minutes et ensuite est refroidi, le récipient est ouvert et la quantité de formaldéhyde décomposé et élué dans la solution est quantifiée, afin d'exprimer ainsi la quantité sous la forme d'un pourcentage en poids de la quantité de copolymère polyacétalique, qui est la quantité du groupe terminal instable,
sous réserve que la composition ne contienne pas à la fois de 0,01 à 5 parties en poids d'un stabilisateur d'altération (léger) et de 1 à 50 parties en poids d'un polymère coeur-écorce possédant un coeur d'un polymère caoutchouteux et une écorce d'un polymère vitreux composé d'un copolymère à base de vinyle.

2. La composition à base de résine polyacétalique selon la Revendication 1, où le composé (D) est au moins un composé sélectionné dans le groupe se composant d'un composé de diisocyanate, un composé de diisothiocyanate, des dimères de ceux-ci et des trimères de ceux-ci.

3. La composition à base de résine polyacétalique selon la Revendication 1 ou 2, où le composé (D) est au moins un composé sélectionné dans le groupe se composant de 4,4'-méthylènebis-(phénylisocyanate), isophorone diisocyanate, 1,5-naphthalène diisocyanate, 1,6-hexaméthylène diisocyanate, 2,4-tolylène diisocyanate, 2,6-tolylène diisocyanate, des dimères de ceux-ci et des trimères de ceux-ci.

4. La composition selon l'une quelconque des Revendications 1 à 3, contenant en outre de 0,01 à 1 partie en poids de (E) au moins un composé métallique sélectionné dans le groupe se composant d'un oxyde métallique, d'un hydroxyde métallique et d'un sel métallique d'acide carboxylique organique à 100 parties en poids du copolymère polyacétalique (A).

5. La composition selon l'une quelconque des Revendications 1 à 4, contenant en outre de 0,01 à 1 partie en poids de (F) au moins un agent de libération sélectionné dans le groupe se composant d'un ester d'acides gras, d'un amide d'acides gras, d'un polyoxyalkylène glycol, et d'un composé de silicone à 100 parties en poids du copolymère polyacétalique (A).

6. Un article moulé à base de résine polyacétalique préparé par le moulage de la composition selon l'une quelconque des Revendications 1 à 5.
